# EUROPEAN PATENT APPLICATION

(11) **EP 4 793 740 A1**
(43) Date of publication of application: **19.08.2026**
(21) Application number: 25305207.0
(22) Date of filing: 17.02.2025
(51) Int. Cl.: G06F 3/01

(54) **METHOD AND APPARATUS FOR HAPTIC SIGNAL ADAPTATION BASED ON AFFECTIVE DATA**

(71) Applicant: InterDigital CE Patent Holdings, SAS, 75017 Paris (FR); INRIA - Institut National de Recherche en Informatique et en Automatique, 78150 Le Chesnay (FR)
(72) Inventor: GALVANE, Quentin, 35235 THORIGNE-FOUILLARD (FR); GLEMAREC, Yann, 35000 RENNES (FR); LECUYER, Gurvan, 35000 RENNES (FR)
(74) Representative: Interdigital

(57) **Abstract**

Methods and devices enable an adaptive haptic experience that endows users with adjustments to their profile or to their physiological reactions. In such context, data representative of a haptic experience not only contains haptic data but also affective data. This additional data indicates the desired affective response of the user during the haptic experience. Two embodiments for adapting a haptic signal to provide consistency in users perceived affect to a haptic stimulus are proposed herein. In a first embodiment, the adaptation is based on an affective haptic profile that describes the user's preferred settings regarding haptic content and affect and comprises parameters allowing to adapt a haptic signal accordingly. In a second embodiment, the adaptation takes into account real time data extracted from users' physiological reactions, thus delivering a physiological closed loop control system.

## Description

### TECHNICAL FIELD

At least one of the present embodiments generally relates to haptic effects and more particularly to affective data indicating a desired emotion to be conveyed by the haptic signal.

### BACKGROUND

Haptics refers to sense of touch and may comprises different distinct channels of sensory experience, kinesthetic, cutaneous and proprioception. The first is linked to the sensation of positions, velocities, forces and constraints that arises from the muscle spindles and tendons. It is related to force feedback devices. It may be provided by force feedback devices, robotic arms, or other kinesthetic rendering devices acting on specialized cells such as mechanoreceptors, muscles spindles and tendons of the human body. The second channel refers to tactile or physical contact with the skin surface. It may be provided through temperature (peltier, heat), texture (Pin array, piezoelectric elements, vibratory pin array, electrode array), vibration/contact (soleniod, piezoelectric elements, motor with eccentric mass, audio speakers), pressure (airjet, ultra sound, smart metal) acting on mechanoreceptors and thermoreceptors of the human body. The third channel relates to sense of the relative position of neighboring parts of the body and strength of effort employed in movement. It is linked to the vestibular system, but not only it also includes muscles spindles, tendons (especially the Golgi tendon organ) and joints. Such effect may be provided through motion simulation by motion platforms or vestibular stimulation. Sometime the proprioception is considered as part of the kinesthetic sensation or differently since it relates to motion.

Haptic can be experienced in movie theaters through 4DX movie. Haptic is an additional track played along with video and audio to augment movie experiences. Haptic is also commonly used in interactive experiences, such as video games or virtual reality (VR) experiences, to enhance the immersion feeling. Providing haptic feedback when interacting with virtual object provides a natural feeling that adds a new layer of realism in the experience.

For interactive experiences in virtual environments, the use of haptic is becoming more and more popular but the integration of this new media remains limited. Most of the videogames and VR experiences are created using game engines such as Unity, or Unreal Engine. Over the past years, those game engines have made tremendous progress on various aspects (image quality, sound, scene complexity...) but they only provide yet very basic support for haptic. For example, only the most common game controller is supported natively by the mainstream game engine, providing simple haptic capabilities limited to vibration in the hand.

Haptic is gaining growing popularity with the release of numerous mass market haptic devices. This broadening range of consumer haptic devices comes with the need for better integration of haptic capabilities in game engine to better support the creation of immersive content. One of the big challenges that could leverage haptic capabilities is the support of haptic spatialization in applications.

### SUMMARY

An aspect of at least one embodiment is directed to a method comprising obtaining information representative of a haptic experience comprising a haptic signal and affective data, the affective data indicating a desired emotion to be conveyed by the haptic signal, obtaining information representative of an affective haptic profile, adapting the haptic signal based on the affective data and the affective haptic profile, and providing the haptic signal for rendering.

An aspect of at least one embodiment is directed to a method comprising obtaining information representative of a haptic content comprising a haptic signal and affective data, the affective data indicating a desired emotion to be conveyed by the haptic signal, rendering the haptic signal, obtaining physiological data representative of a perceived emotion by a user perceiving the haptic signal and adapting the haptic signal based on the affective data until the physiological data representative of a perceived emotion matches the desired emotion.

An aspect of at least one embodiment is directed to a method comprising iterating on a set of reference contents, a reference content comprising a haptic signal associated with affective data indicating a desired emotion to be conveyed by the haptic signal for the reference content and, for an iterated reference content, rendering the haptic signal, providing to a user an indication of the desired emotion to be conveyed by the haptic signal, obtaining parameters for modifying the haptic signal, rendering an adapted haptic signal modified based on the obtained parameters, iterating on the obtaining and rendering steps until obtaining an indication that the calibration is completed for the iterated reference content; and adding to the affective haptic profile an element comprising affective data indicating the desired emotion for the reference content, the haptic signal and the obtained parameters.

An aspect of at least one embodiment is directed to an apparatus comprising a processor configured to obtain information representative of a haptic experience comprising a haptic signal and affective data, the affective data indicating a desired emotion to be conveyed by the haptic signal, obtain information representative of an affective haptic profile, adapt the haptic signal based on the affective data and the affective haptic profile, and provide the haptic signal.

An aspect of at least one embodiment is directed to an apparatus comprising a processor configured to obtain information representative of a haptic content comprising a haptic signal and affective data, the affective data indicating a desired emotion to be conveyed by the haptic signal, render the haptic signal, obtain physiological data representative of a perceived emotion by a user perceiving the haptic signal and adapt the haptic signal based on the affective data until the physiological data representative of a perceived emotion matches the desired emotion.

An aspect of at least one embodiment is directed to an apparatus comprising a processor configured to iterate on a set of reference contents, a reference content comprising a haptic signal associated with affective data indicating a desired emotion to be conveyed by the haptic signal for the reference content and, for an iterated reference content, render the haptic signal, provide to a user an indication of the desired emotion to be conveyed by the haptic signal, obtain parameters for modifying the haptic signal, render an adapted haptic signal modified based on the obtained parameters, iterate on the obtaining and rendering steps until obtaining an indication that the calibration is completed for the iterated reference content; and add to the affective haptic profile an element comprising affective data indicating the desired emotion for the reference content, the haptic signal and the obtained parameters.

An aspect of at least one embodiment is directed to a computer program comprising program code instructions executable by a processor, the computer program implementing at least the steps of one of the methods described above.

An aspect of at least one embodiment is directed to a computer program product stored on a non-transitory computer readable medium and comprising program code instructions executable by a processor, the computer program product implementing at least the steps of one of the methods described above.

### BRIEF DESCRIPTION OF THE DRAWINGS

The present disclosure may be better understood by consideration of the detailed description below in conjunction with the accompanying figures in which:
Figure 1 illustrates a block diagram of an example of system in which various aspects and embodiments are implemented.
Figure 2 illustrates an example of data structure of an immersive scene description for handling interactive haptic actions according to at least one embodiment.
Figure 3 illustrates an example of data structure for a haptic object.
Figure 4 illustrates an example of signal coded using two haptic bands.
Figure 5 illustrates an example of parameter space of a circumplex model of affect.
Figures 6A illustrates an example of graphical elements for providing inputs to a calibration process according to the first embodiment.
Figure 6B illustrates an example of calibration process according to the first embodiment.
Figure 6C illustrates an example of haptic experience adaptation process according to the first embodiment.
Figure 6D illustrates a first variant of haptic experience adaptation process according to the first embodiment.
Figure 6E illustrates a second variant of haptic experience adaptation process according to the first embodiment.
Figure 7A and 7B illustrate examples of client-server interactions for streaming a haptic experience according to the first embodiment.
Figure 7B illustrates the same situation as Figure 7B, with the difference that the adaptation is performed on the server side.
Figure 8 illustrates an example of operations according to the first embodiment.
Figure 9 illustrates an example of operations according to the second embodiment.
Figure 10A illustrates an example of calibration method for determining an affective haptic profile according to embodiments.
Figure 10B illustrates an example method for adapting a haptic experience using an affective haptic profile according to the first embodiment.
Figure 10C illustrates an example method for adapting a haptic experience using an affective haptic profile according to the second embodiment.

It should be understood that the drawings are for purposes of illustrating examples of various aspects, features and embodiments in accordance with the present disclosure and are not necessarily the only possible configurations.

### DETAILED DESCRIPTION

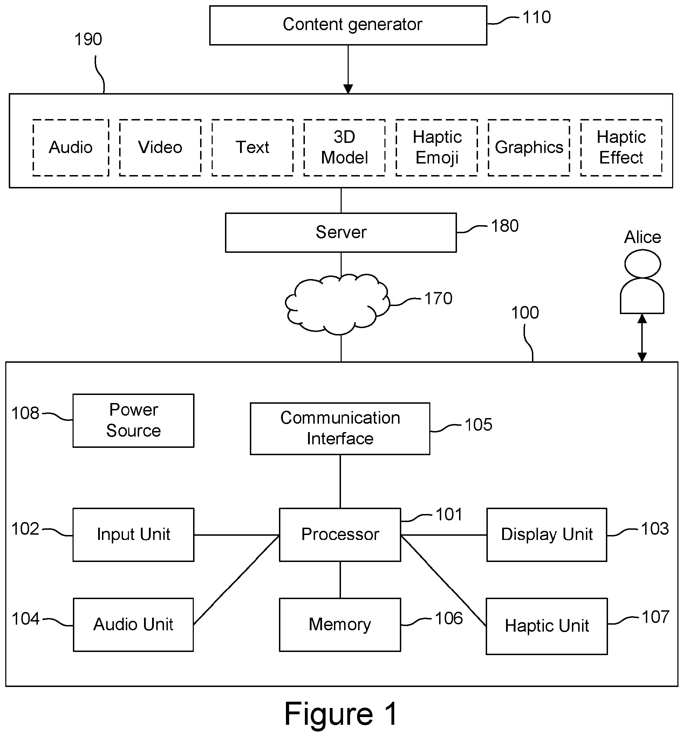

**Figure 1** illustrates a block diagram of an example of system in which various aspects and embodiments are implemented. In the depicted system, the user Alice uses the rendering device 100 to interact with a server 180 providing a content 190 through a communication network 170. This content 190 may take many different forms and may comprise various data and/or files such as audio data, video data, text, graphics required for its rendering. It may comprise haptic effects, and more particularly information related to the spatialization and propagation of haptic effects. The content 190 may be generated under control of a content generator 110 that may take different forms according to different context of usage. For example, when the content is a written document, the content generator may be implemented for example as an edition software running on a computer or server. When the content is a flow of interpersonal interactions (E.g., SMS) or social media interactions (E.g., WhatsApp, Twitter), the content generator may be implemented for example as an interaction manager software running on a computer.

The rendering device 100 is an apparatus that comprises a processor 101. The processor 101 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor may perform data processing such as haptic signal decoding, input/ output processing, and/or any other functionality that enables the device to operate in an immersive system.

The processor 101 may be coupled to an input unit 102 configured to convey user interactions. Multiple types of inputs and modalities can be used for that purpose. A physical keypad and a touch sensitive surface are typical examples of input units adapted to this usage although voice control could also be used. In addition, the input unit may also comprise a digital camera able to capture still pictures or video in two dimensions or a more complex sensor able to determine the depth information in addition to the picture or video and thus able to capture a complete 3D representation. The processor 101 may be coupled to a display unit 103 configured to output visual data to be displayed on a screen. Multiple types of displays can be used for that purpose such as a liquid crystal display (LCD) or organic light-emitting diode (OLED) display unit. The processor 101 may also be coupled to an audio unit 104 configured to render sound data to be converted into audio waves through an adapted transducer such as a loudspeaker for example. The processor 101 may be coupled to a communication interface 105 configured to exchange data with external devices. The communication preferably uses a wireless communication standard to provide mobility of the rendering device, such as cellular (e.g., LTE) communications, Wi-Fi communications, and the like. The processor 101 may access information from, and store data in, the memory 106, that may comprise multiple types of memory including random access memory (RAM), read-only memory (ROM), non-transitory computer readable medium, a hard disk, a subscriber identity module (SIM) card, a memory stick, a secure digital (SD) memory card, any other type of memory storage device. In embodiments, the processor 101 may access information from, and store data in, memory that is not physically located on the device, such as on a server, a home computer, or another device.

The processor 101 is coupled to a haptic unit 107 configured to provide haptic feedback to the user (e.g.: vibrations), defined by the haptic effect described in the content 190. The haptic unit 107 may comprise a single haptic actuator or a plurality of haptic actuators located at a plurality of positions on the rendering device. Different haptic units may have a different number of actuators and/or the actuators may be positioned differently on the rendering device. A haptic unit may also be combined with an input unit to provide simultaneously an input to the system and provide feedback in the form of a haptic effect. A haptic unit may be integrated in the device or may be provided as a separate device. The haptic engine and rendering engine described below may be implemented by the processor 101, or by a separate processor (not depicted) or in separate devices.

In at least one embodiment, the processor 101 is configured to render a haptic signal according to embodiments described further below, in other words to apply a low-level signal to a haptic actuator to render a haptic effect. Such low-level signal may be represented using different forms, for example by metadata or parameters in the description file or by using a digital encoding of a sampled analog signal (e.g., PCM or LPCM).

The processor 101 may receive power from the power source 108 and may be configured to distribute and/or control the power to the other components in the device 100. The power source 108 may be any suitable device for powering the device. As examples, the power source may include one or more dry cell batteries (e.g., nickel-cadmium (NiCd), nickel-zinc (NiZn), nickel metal hydride (NiMH), lithium-ion (Li-ion), and the like), solar cells, fuel cells, and the like.

While the figure depicts the processor 101 and the other elements 102 to 108 as separate components, it will be appreciated that these elements may be integrated in an electronic package or chip. It will be appreciated that the rendering device 100 may include any subcombination of the elements described herein while remaining consistent with an embodiment. In addition, although the rendering device is presented as a standalone apparatus, it may also be implemented as a combination of different apparatuses. The processor 101 may further be coupled to other peripherals or units not depicted in figure 1 which may include one or more software and/or hardware modules that provide additional features, functionality and/or wired or wireless connectivity. For example, the peripherals may include sensors such as a universal serial bus (USB) port, a vibration device, a television transceiver, a hands-free headset, a Bluetooth^{®} module, a frequency modulated (FM) radio unit, a digital music player, a media player, a video game player module, an Internet browser, and the like.

Typical examples of a rendering device 100 are smartphones, tablets, computers, game/AR/VR controllers, headphones, or any other object with integrated haptic capabilities able to render a haptic effect.

Other examples of rendering devices 100 do not comprise any haptic capabilities but are in relation with one or more device able to render a haptic effect such as haptic gloves, haptic chairs, haptic props, motion platforms. In this case, the rendering device 100 may prepare data for rendering the haptic effect so that another device, such as a haptic prop, can perform the haptic rendering. Examples of such devices are television sets, head-mounted displays, gamepads, or laptops.

In at least one embodiment, the device does not include a display unit, nor does it include a haptic unit. In such embodiment, the device does not visually render the content 190 and does not render the associated haptic effects. However, the device may prepare data for display so that another device, such as a screen, can perform the display and may prepare data for rendering the haptic effect so that another device, such as a haptic prop, can perform the haptic rendering. Examples of such devices are computers, game consoles, optical media players, or set-top boxes.

In at least one embodiment, the content 190 and associated elements are directly hosted in memory 106 of the rendering device 100 allowing local rendering and interactions. In a variant of this embodiment, the device 100 also comprises the content generator 110 allowing a fully standalone operation, for example without needing any communication network 170 and server 180.

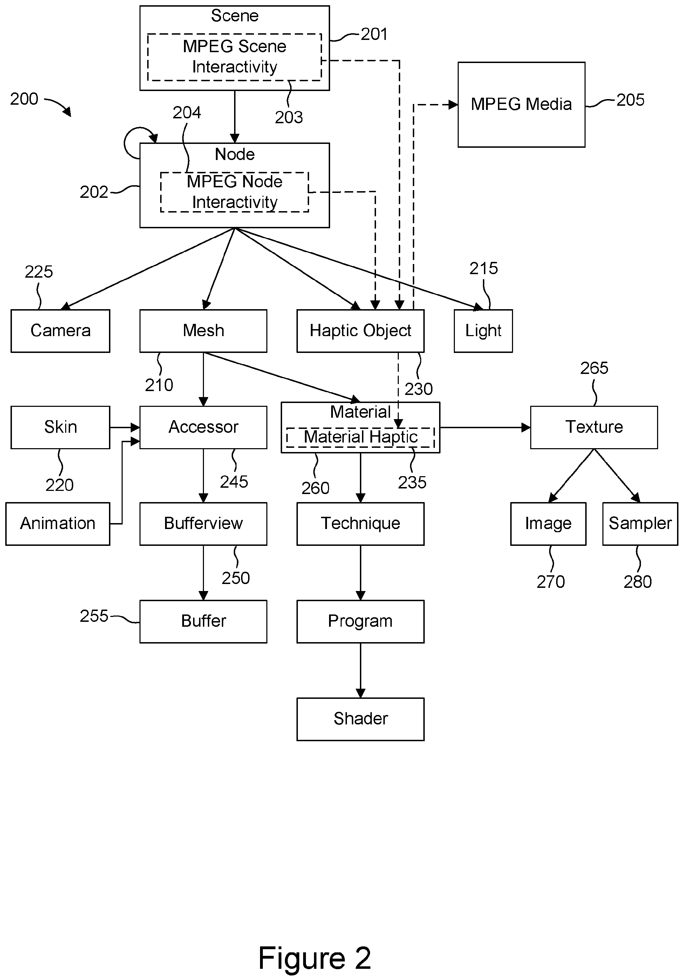

**Figure 2** illustrates an example of data structure of an immersive scene description for handling interactive haptic actions according to at least one embodiment. This embodiment is based on the glTF^{™} file format. The core of glTF^{™} is a JSON file that describes the structure and composition of a scene containing 3D models. The figure shows the relationship between the elements composing this data structure of an immersive scene description 200. In this context, a scene 201 is the top-level element gathering all the other elements. It comprises an array of nodes. Each node 202 can contain child nodes allowing to create a hierarchy. A node may refer to a mesh or camera or skin and a local geometrical transform may be associated with the node. A mesh 210 corresponds to the geometry data required to render the mesh. A skin 220 is used to perform vertex skinning to let vertices of a mesh be influenced by the bones of a skeleton based on its pose. A camera 225 determines a projection matrix. A light 215 determines the lighting properties associated with the node. Buffers 255 contain the data used for the geometry of 3D models, animations, and skinning. BufferViews 250 add structural information to the buffer data, while accessor 245 define the exact type and layout of BufferViews. Material 260 determines how an object should be rendered based on physical material properties. Texture 265 allows to define the appearance of an object. Images 270 define the image data used for a texture while a sampler 280 describes the wrapping and scaling of textures. Media files (for example audio WAV file for sound or haptic signals) may be combined in the MPEG media 205.

The immersive scene description file further comprises a haptic object 230 that describes a haptic effect to be rendered. A haptic object is identified in the file format as "MPEG_Haptic" and its syntax is further described below. A haptic object is attached at the node level to indicate that the node refers to haptic media and relies on independent haptic media like an audio content or an image. A haptic object may be associated with a material haptic 235, identified in the file format as "MPEG_material_haptics" that allows to define the haptic effect based on a texture 265.

The immersive scene description file further comprises an interactivity-related object, either located at the scene level (MPEG Scene Interactivity 203) or at the node level (MPEG Node Interactivity 204). Such interactivity-related objects allow to define interactions between the user and the immersive objects (nodes), thus creating a more animated immersive scene.

Other elements are conventional elements of an immersive representation and not related to embodiments, thus are not described herein.

Embodiments described herein aim to add haptic effects to the interactivity of an immersive scene and thus increase the quality of the user experience by allowing the user to physically sense the interactions through vibrations, heat, movements, etc.

According to embodiments, these elements of an immersive scene description file based on the glTF^{™} format allow to define an immersive scene with an interactive haptic action.

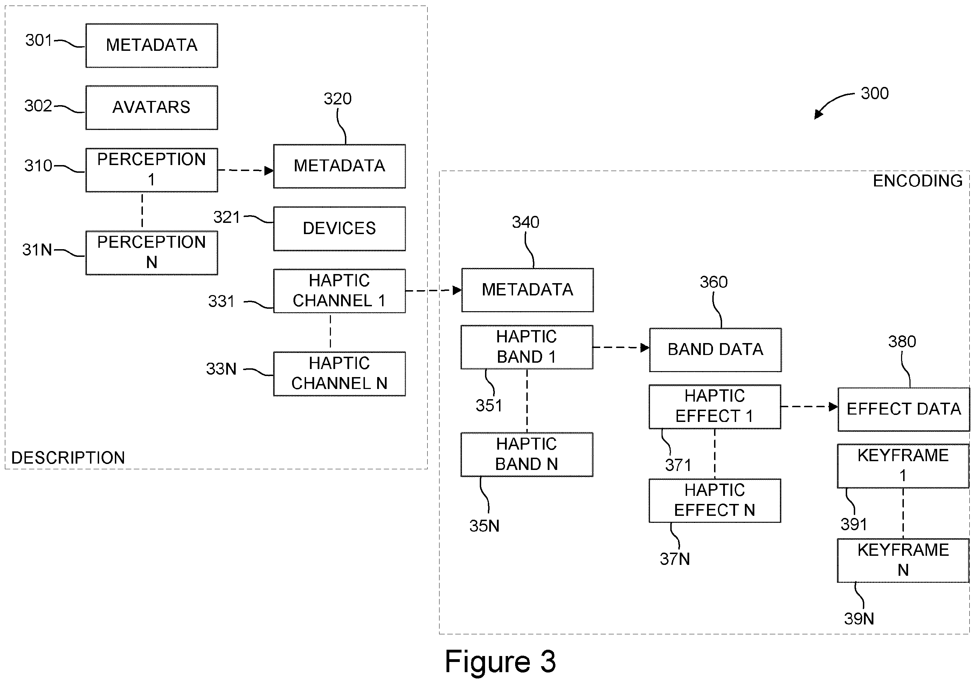

**Figure 3** illustrates an example of data structure for a haptic object. The data structure 300 represents a haptic object 230 of figure 2 and can be decomposed in a set of layers. At the upper layer, metadata 301 describe high-level metadata information regarding the overall haptic experience defined in the data structure 300 and a list of avatars 302 (i.e., body representation) later referenced in the file. These avatars allow to specify a target location of haptic stimuli on the body. The haptic effects are described through a list of perceptions 310, 31N. These perceptions correspond to haptic signals associated with specific perception modalities such as vibration, force, position, velocity, temperature, etc.). A perception comprises metadata 320 to describe parameters (such as the modality) of the haptic signal, devices 321 to describe specifications of a reference haptic device for which the signal was designed and a list of haptic channels 331, 33N. A haptic channel comprises metadata 340 to describe the content of the channel, the associated gain value, a mixing weight, body localization information and a reference to haptic device specification (defined at the perception level). The channel finally contains a list of haptic bands 351, 35N, each band defining a subset of the signal within a given frequency range. For example, the haptic band 351 may correspond to the range of frequencies from 0 to 50 Hz while the haptic band 35N may correspond to the range of frequencies over 2 kHz. A haptic band comprises band data 360 to describe the frequency range of the band, the type of encoding modality (Vectorial or Wavelet), the type of band (Transient, Curve and Wave) and optionally the type of curve interpolation (Cubic, Linear or unknown) or the window length. A haptic band is defined by a list of haptic effects 371, 37N. Finally, a haptic effect comprises a list of keyframes 391, 39N and effect data 380, a keyframe being defined by a position (i.e., a temporal reference), a frequency and an amplitude. The effect data describes the type of base signal selected amongst Sine, Square, Triangle, SawToothUp, and SawToothDown as well as provide temporal references such as timestamps. The low-level haptic signal can then be reconstructed based on the keyframes in the different bands.

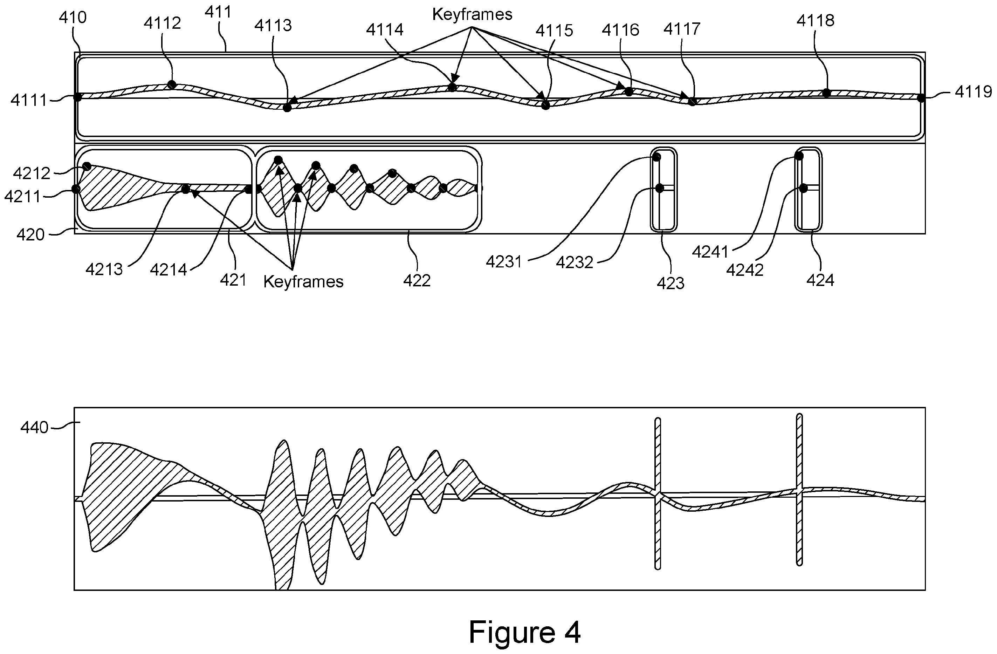

**Figure 4** illustrates an example of signal coded using two haptic bands. With this technique, a low-level haptic signal is encoded using a two frequency bands, a low frequency band 410 and a high frequency band 420, each of them defining a part of the signal in a given frequency range. In this example, the low frequency band corresponds to frequencies below 72.5 Hz while the high frequency band corresponds to frequencies equal to or higher than 72.5 Hz. On the rendering side, the device combines the two parts together (i.e., adding them together) to generate the final haptic signal 440.

The data for a frequency band may be reconstructed based on keyframes and according to a type of haptic band selected amongst Transient, Curve and Wave bands. Additionally, for Wave bands, two types of encoding modalities can be used: Vectorial or Wavelet. Each band is composed of a series of Effects and each Effect is defined by a list of Keyframes that are represented as dots in the figure. The data contained in the effects and keyframes is interpreted differently for different types of haptic bands and encoding modalities.

For a Transient band, each effect stores a set of keyframes defining a position, an amplitude, and a frequency. A keyframe represents a transient event. The signal may be reconstructed using the type of periodic base signal specified in the effect metadata with the amplitude specified in the keyframe and the period given by the frequency of the keyframe. A transient event is a very short signal generated for a few periods only. The number of generated periods is determined by the decoder.

For a Curve band, each effect stores a set of keyframes defining a position (i.e., a temporal reference) and an amplitude. The keyframes represent control points of a curve and an interpolation is performed to generate the curve from the control points. The type of interpolation function is either cubic or linear and is specified in the metadata of the band (380 in Figure 3). The signal may be reconstructed by performing an interpolation between the amplitudes of keyframes according to their temporal references.

For Vectorial Wave bands, the effect stores a set of keyframes defining a position (i.e., a temporal reference), an amplitude and a frequency. In this case, the signal is generated using the type of periodic base signal specified in the effect metadata with the amplitude specified in the keyframe and the period given by the frequency of the keyframe. The SPIHT wavelet encoding scheme (http://www.siliconimaging.com/SPIHT.htm) may be used for the Wavelet band or types of wavelet encoding. For example, for the Wavelet band, the effect may store the contents of one wavelet block. It contains a keyframe for every coefficient of the wavelet transformed and quantized signal, indicating the amplitude value of the wavelet. The coefficients are scaled to a range of [-1,1]. Additionally, the original maximum amplitude is stored in a keyframe, as well as the maximum number of used bits. In this case, the signal may be reconstructed using the coefficients to perform an inverse wavelet transform.

The frequency band decomposition may use a Low Pass Filter and a High pass filter to split the signal into a low frequency band and a high frequency band. The two bands are then processed differently. Various methods can be used for the encoding of the high frequency part. A first solution is to split the high frequency signal into smaller fixed length windows and use Short-time Fourier Transform (STFT) to decompose the signal in the frequency spectrum. Another solution is to use wavelet transforms to encode the high frequencies. The data structure illustrated in figure 3 allows to define multiple bands with different frequency ranges. These bands are used to store the coefficients of the Fourier or Wavelet Transforms.

For the low frequency part of the signal, the data of this frequency band is stored through a list of keyframe points defined by a timestamp and an amplitude. The data also contains information relative to the type of interpolation used to reproduce the signal of this band. The keyframes (i.e., control points) defining the low frequency band are obtained by simply extracting the local extrema of the low frequency signal.

In the example of the figure, the low frequency band 410 is defined as a Curve band using a single effect 411. Such representation is particularly adapted to the low frequency part of the signal. The effect 411 is defined by the keyframes 4111, 4112, 4113, 4114, 4115, 4116, 4117, 4118, 4119. The signal for the low frequency band is generated by a cubic interpolation between these keyframes. The high frequency band 420 is defined by 4 effects 421, 422, 423, 424. These effects are defined as Vectorial bands. The effect 421 is based on 4 keyframes 4211, 4212, 4213, 4214. The effect 422 is based on 11 keyframes (not numbered on the figure). The effect 423 is based on 2 keyframes 4231 and 4232. The effect 424 is based on 2 keyframes 4241 and 4242.

While the description is based on a set of two bands defining a range for low frequencies and a range for high frequencies, the principles apply also in the case more than two ranges of frequencies are used. In this case, the low frequency band becomes the lowest frequency band, and the high frequency band becomes the highest frequency band. The lowest frequency band may for example be encoded using a curve band using a single effect, as represented by the low frequency band 410 of figure 4. Other frequency bands may be encoded with any of the other type of encoding, for example using a vectorial wave band based on wavelets, as represented by the high frequency band 420 of figure 4 but using multiple instances of encoding, one for each band of frequencies.

One advantage of this solution with regards to the structure is that the signal data is easy to package and particularly convenient for streaming purposes Indeed, with such linear structure, the data can be easily broken down to small consecutive packages and does not require complicated data-pre-fetching operations. The signal is easily reconstructed by patching the packages back together to ensure a smooth playback of the signal. It may also be reconstructed by only taking the low frequency part and reconstruct a lower quality (but potentially sufficient) signal without taking into account the high frequency band.

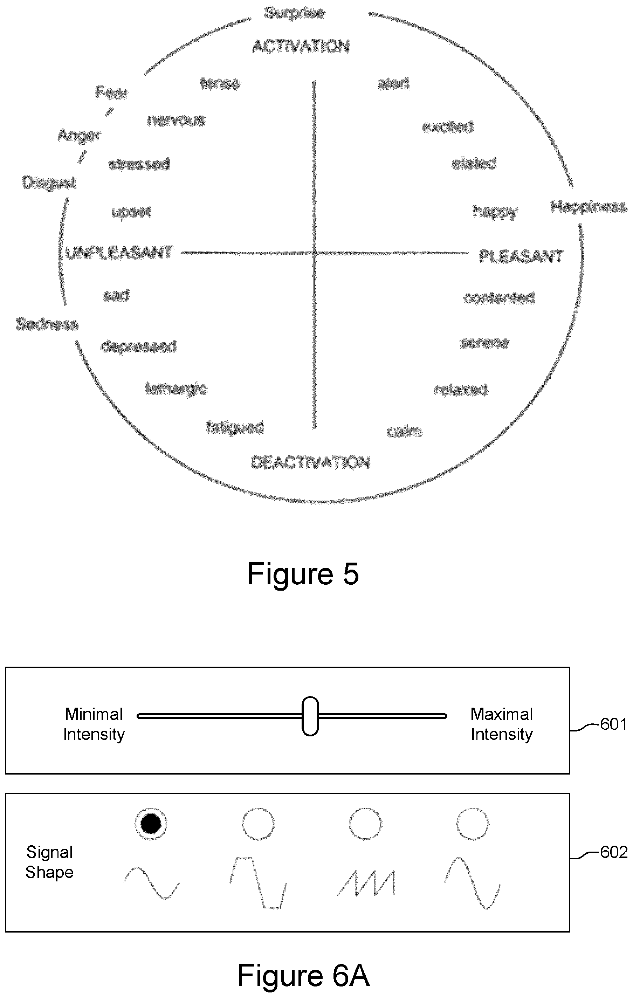

**Figure 5** illustrates an example of parameter space of a circumplex model of affect. While haptic effects may simply be associated with timed punctual events or result from an interaction with a virtual scene (e.g., an explosion, a shotgun, car engine in a video game), haptic can also be used to convey or reinforce emotions for a given experience. Whether it is used in games, movies, or other immersive experiences, haptic plays a considerable role in the emotional impact of the experience on the audience. The study of the relation between haptics and emotions is the core of an emerging research area called affective haptics. This research topic focuses on the study of the influence of the stimulation of the human haptic sensory system on the emotional state of a human. There are multiple emotion models with various approaches to represent emotion perception. These models emerge from cognitive psychology research and can be categorized into three groups: categorical, continuous and appraisal based. Categorical models bind an emotion with a category, for instance P. Ekman and his colleagues gather a collection of facial expressions that can elicit basic emotions such as fear, anger, amusement, or pride. Whereas continuous models used continuous dimensions to create a parameter space on which they map different emotions. In such context, continuous models' dimensions may be associated with non-verbal behaviors and used with virtual agents or embodied conversational agents, in public speaking training or exposure therapy applications. Such models can even include further dimensions like pleasure, arousal, dominance, expectation or intensity. Affect and emotion perception may rely on theories that state the importance of the evaluation and the interpretation of an event to explain an individual's emotion. Thus, an affect model may be a hybrid model including continuous dimensions and categorical variables such as the interaction context. In the example of figure 5, the circumplex model of affect is illustrated. This model categorizes emotions in a circular 2-dimensional space. Valence is represented in the horizontal direction and Arousal is represented in the vertical direction. The origin of this space represents a neutral valence and a medium level of arousal.

Syntax elements dedicated to an affect model may be used by haptic designers to enrich their haptic experience by providing information on the desired affective response of the designed haptic effect. A generic affect model based on the syntax described below allows to use existing affective models or design custom models. A parametric model allows to specify existing models of affect or create new models by defining a custom parameter space. An example of syntax is described in Table 1, Table 2 and Table 3. This generic representation defines the name of the model, provides a description of the model, indicates the number of dimensions and defines the continuous and categorical parameters.

**Table 1**

| **Property** | **Description** |
|---|---|
| **model** | Affective model used to describe the desired emotional state of the spectator. Possible values include "Circumplex", "PAD", "Appraisal", "Custom" |
| **description** | Description of the model |
| **dimensions** | Number of parameters used to define the model |
| **continuous_parameters** | List of numerical parameters. Values are in the range [-1,1] |
| **categorical_parameters** | List of parameters |

**Table 2**

| **Property** | **Description** |
|---|---|
| **name** | Name of the parameter. |
| **description** | Description of the parameter. |

**Table 3**

| **Property** | **Description** |
|---|---|
| **name** | Name of the parameter. |
| **range** | Number of possible values. It indicates the number of categories associated to the parameter. |
| **description** | Description of the parameter. The description should define all the possible values of the parameter. |

As an example of haptic file containing a single effect, the circumplex model can be defined in the metadata of the experience and then used to provide the affective data associated with the haptic effect as illustrated with the syntax below.

```
{
        "version": "2023",
        "profile": "Main",
        "level":1,
        "date":"Mon Sep 16 15:15:33 2024\n",
        "description":"Example effect",
        "timescale": 1000,
        "avatars": [
 
        ],
        "affect_models":[
          {
           "model" :"Circumplex",
           "description":"Affective model based on Valence and Arousal",
           "dimensions":2,
           "continuous_parameters":[
             {
               "name": "Valence",
               "description":"Valence parameter of the circumplex model"
             },
             {
               "name":"Arousal",
               "description":"Arousal parameter of the circumplex model"
             }
           ],
           "categorical_parameters":[
 
           ]
          }
        ]
      , "perceptions":[
          {
           "id":0,
           "avatar_id":0,
           "description":"Vibration effect",
           "perception_modality":"Vibrotactile",
           "unit _exponent":-3,
           "perception_unit_exponent":0,
           "reference_devices":[
 
           ],
           "effect_library":[
 
           ],
           "channels":[
             {
               "id":0,
               "description":"Channel 0",
               "gain":1.0,
               "mixing_coefficient":1,
               "body_part_mask":131072,
               "bands":[
                 {
                  "band_type":"VectorialWave",
                  "lower_frequency_limit":0,
                  "upper_frequency_limit":1000,
                  "effects":[
                    {
                      "effect_type":"Basis",
                      "position":0,
                      "phase":0.0,
                      "base_signal":"Sine",
                      "keyframes":[
                        {
                         "relative_position":0,
                         "amplitude_modulation":0.1,
                         "frequency_modulation":200
                        },
                        {
                         "relative_position":1000,
                         "amplitude_modulation":0.2,
                         "frequency _modulation":200
                        }
                      ],
                      "affect_data":{
                        "model":"Circumplex",
                        "continuous_parameters":0.7,
                        "categorical_parameters":0.7
                      }
                    }
                  ]
               ]
             }
           ]
          }
        ],
        "syncs":[
          {
           "timestamp":0,
           "timescale": 1000
          }
        ]
      }
```

Research in affective haptics tends to study how to elicit human emotions through the human haptic sensory system, to process and detect emotions according to haptic data, and how to render emotional reactions. However, multiple components of a haptic signal can alter a user's affect or how they physiologically react to it, e.g., through physiological responses such as heart rate, facial expressions, electro-dermal activity, gesture expressions, or brain activity. A haptic designers' artistic vision may be altered by user's emotional state and subjective environmental aspects. Also, they may develop the haptic experience on specific devices that end users might have in different settings or not at all.

Embodiments described hereafter have been designed with the foregoing in mind and proposes a solution enabling an adaptive haptic experience that endows users with adjustments to their profile or to their physiological reactions (i.e., real-time). Even if affects are subjective, such adaptation allows to deliver a universal affective-haptic experience. In the embodiments described herein, data representative of a haptic experience not only contains haptic data but also affective data. This additional data indicates the desired affective response of the user during the haptic experience. This desired affective response may be dynamic, evolving throughout the experience and may be defined using established emotion models such as the Circumplex of affect or Appraisal theories, or using a generic affective model described above.

Two embodiments for adapting a haptic signal to provide consistency in users perceived affect to a haptic stimulus are proposed herein. In a first embodiment, the adaptation is based on an affective haptic profile that describes the user's preferred settings regarding haptic content and affect and comprises parameters allowing to adapt a haptic signal accordingly. In a second embodiment, the adaptation takes into account real time data extracted from users' physiological reactions, thus delivering a physiological closed loop control system.

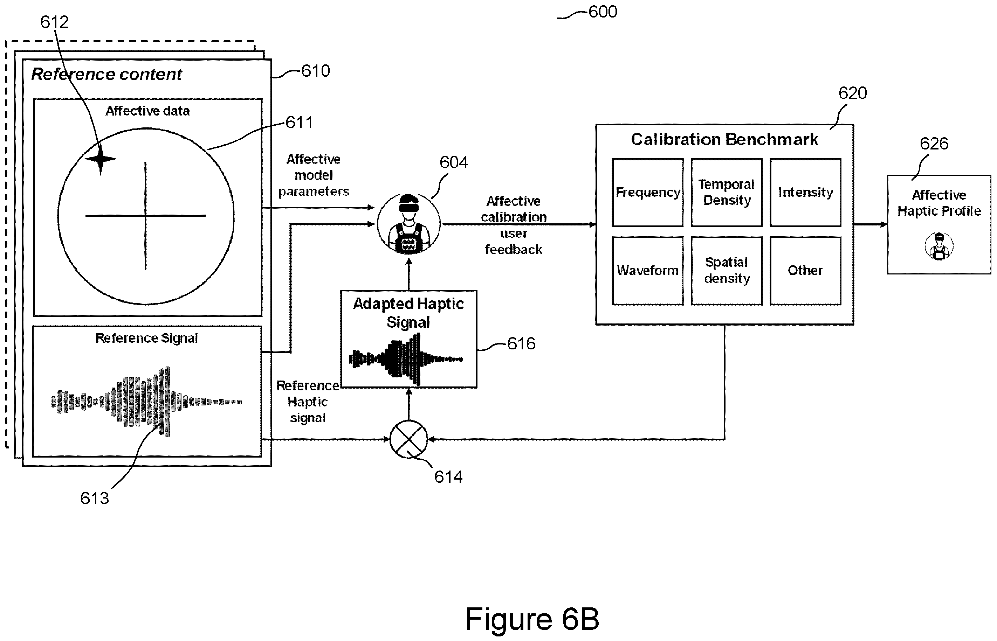

**Figures 6A** illustrates an example of graphical elements for providing inputs to a calibration process according to the first embodiment. **Figure 6B** illustrates an example of calibration process according to the first embodiment. In this first embodiment, the notion of "affective haptic profile" is introduced to describe a user's preferred settings regarding haptic content (e.g. vibro-tactile, temperature, kinesthetic, etc.) that elicits an emotional reaction. This profile characterizes how haptic signals should be adapted according to a desired emotion to arouse. For instance, such profile can be used to indicate how haptic parameters (i.e., intensity, frequency, waveform, body location, spatial density, etc.) of a haptic signal must be adjusted for a given user to elicit a specific emotional response (e.g. fear, compassion, sadness, etc.). When designing a haptic experience, a designer provides information on the desired affective response of each haptic effect, so that the affective haptic profile can then be used to adjust the haptic feedback and tailor the experience to the user. This ensures that the artistic intent of the content creator is preserved and protects users from extreme and unpleasant experiences (e.g. with too intense signals with a max intensity, temperature, or force applied). In this first embodiment, the adaptation of the haptic signal to the profile user may be done in real time or may be computed in advance.

The proposed approach consists in gathering user's affective interpretations of haptic stimuli based on reference haptic signals to adapt the designed haptic experiences to subjective characteristics extracted from these user affective settings. These affective haptic profiles may be determined in a calibration process to create or edit this affective haptic profile that filters and adapts a haptic signal carrying a targeted emotional experience. A given reference haptic signal that is designed to elicit a specific emotion (i.e. trigger a specific affective response) is provided to a user. The user provides feedback on how to adjust the haptic signal to align their personal affective response with the desired affective response. The desired affective response may be characterized using established emotion models such as the Circumplex of affect, or Appraisal theories, or using the generic affective model introduced above. Ideally, the affective data associated to the set of reference signals should cover as much as possible of the parameter space of the affect model.

The calibration process 600 is for example implemented in a device 100 of figure 1, and more particularly by the processor 101 of this device. The process is based on a set of the reference content 610 that may be provided in the form of a series of reference signals for example represented by HJIF parametric data associated with affective model parameters 612 describing the artistic intent according to an affect model 611. The association is done under control of a haptic experience designer. The designer provides reference signals 613 and annotates them with affective parameters 612 describing the desired affective response, i.e., the artistic intent. In the example of the figure, the affect model 611 is based on the model of figure 5 and the expected response 612 corresponds to "fear". The calibration process is based on a calibration benchmark. This benchmark 620 allows users to provide their feedback on how to adjust the signals, for example through interaction with graphic elements 601 and 602 of figure 6A. The user may use the calibration benchmark to adapt the haptic content according to his or her preferences and haptic devices. This is done by generating from the reference haptic signal an adapted haptic signal 616, the adaptation being under control of the user 604 through the calibration benchmark using some feedback. The user may adjust the parameters until the signal 616 corresponds to the perceived affect and thus matches the artistic intent. This calibration step may be iterated over the elements of the set of reference content 610. The resulting parameters determine the affective haptic profile 626 that provides a correspondence between a reference content (including a haptic signal and the associated affective data) and the parameters set up by the user to modulate the signal to match the associated affective response. This affective haptic profile may be used with any haptic experience to tailor the haptic feedback to the user while maintaining the artistic intent. For a given user, this procedure allows to characterize the adjustments to perform on the haptic parameters (i.e. frequency, intensity, waveform or spatial density, etc.) for a given emotion (e.g. fear, joy, sadness, contentment etc.) and haptic feedback. This calibration may be done through a series of subjective questions for each reference signal. Such questionnaire may take different forms as illustrated by graphical elements 601 and 602 of figure 6A. For each reference signal with a given desired affective response, the user may indicate how to modulate the intensity or frequency of the signal (with a gain for instance to maintain the shape of the signal), what waveform to use, how to increase or decrease the spatial density, how to change body location, etc. The slider 601 allows to adjust continuous data. The user may move the slider 601 for example to reach a vibration intensity so that the current vibration signal correspond to a stressful beat. The checkboxes 602 allow to adjust discrete data. The user may select the signal that they consider the most recomforting according to the haptic feedback with their device.

The outcome of the calibration process is the affective haptic profile of the user. It may be defined through different forms, for example defined as the feedback of the user for each reference affective state.

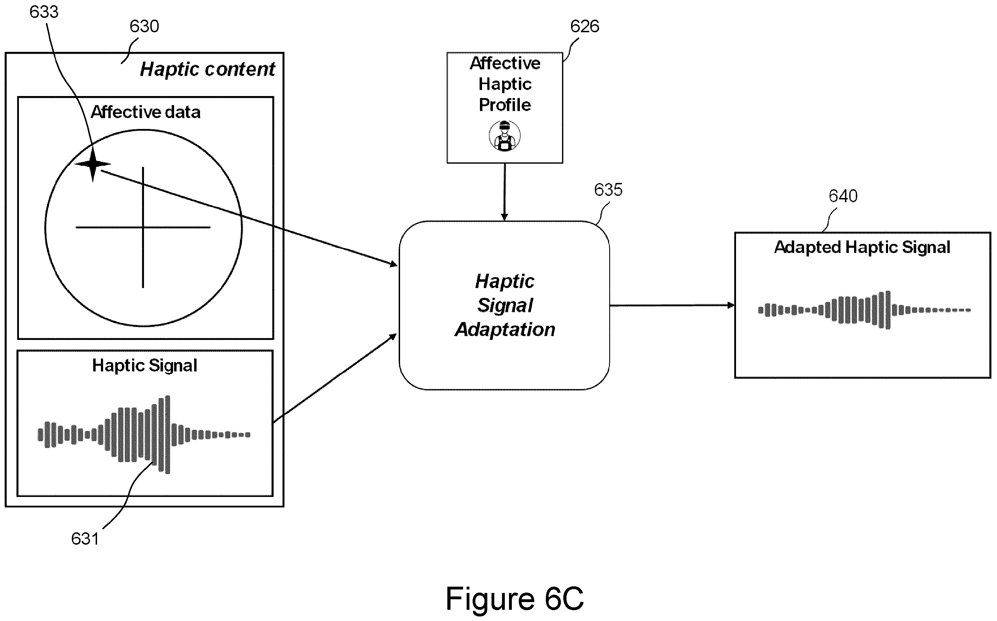

**Figure 6C** illustrates an example of haptic experience adaptation process according to the first embodiment. In other words, it shows how a user's affective haptic profile may be used to adapt a haptic signal so that it conveys an expected emotion for the user. Such process is for example implemented in a device 100 of figure 1, and more particularly by the processor 101 of this device. Based on the affective haptic profile 626 of the user, on the haptic signal 631 and corresponding expected affect 633 for the haptic content 630, a haptic signal adaptation process 635 modifies the haptic signal so that it better corresponds to the affective haptic profile of the user. In this example, the expected affect 633 corresponds to "fear". The user's affective haptic profile, for such affect, reduces the intensity of the signal because the user prefers a dimmed effect for such affective haptic effect.

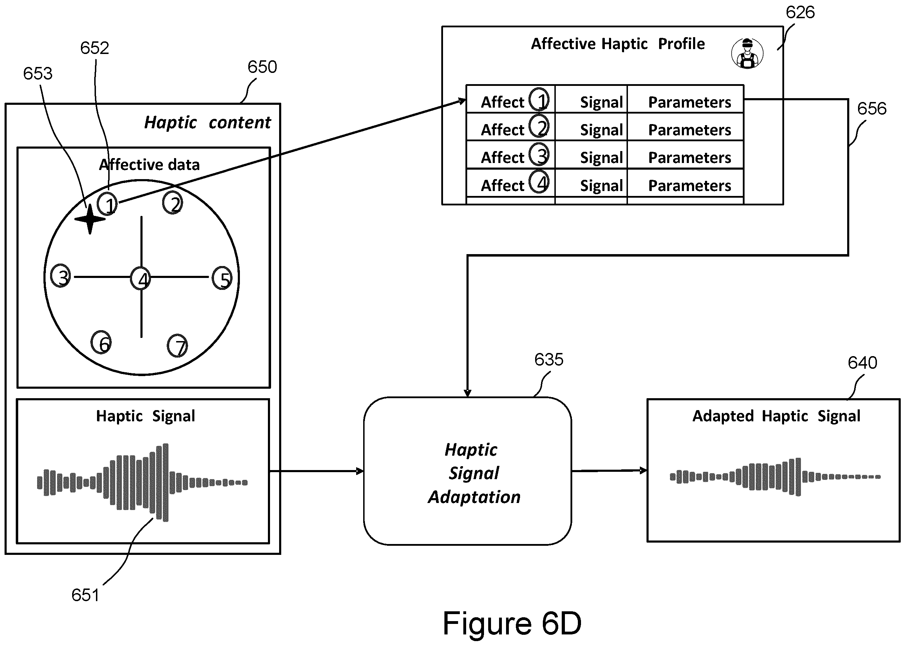

**Figure 6D** illustrates a first variant of haptic experience adaptation process according to the first embodiment. If the profile is defined with the raw data from the calibration process, i.e., with the modification of the haptic parameters specified by the user for each of the reference signals and associated affective data, the adaptation process may perform an analysis of the profile to define adaptation rules. Indeed, it would be tedious to perform the calibration for all nuances of affect. Therefore, the affective haptic profile may comprise adaptation parameters only for a limited set of affect. When the expected affective response for a haptic effect is not present in the affective haptic profile, the processor searches the profile to find the closest desired affective response and use the adaptation parameters (i.e. feedback of the user provided through the calibration benchmark) associated to this reference signal to adjust the haptic signal of the experience. In the example of figure 6D, for the sake of simplicity and readability of the drawing, the affective haptic profile only comprises 7 different desired affective responses represented by the circled numbers 1 to 7. When the affect 653 associated to the haptic signal 651 of the haptic content 650 is not found in the profile, the processor finds the closest match, in this example the element 652 and uses the corresponding parameters 656 from the affective haptic profile 626 to adapt the haptic signal 651 and determine the adapted haptic signal 640.

Figure 6C and 6D are solutions where the adaptation process selects reference content from the affective haptic profile only based on the affective data of the reference content and the affective data of the experience. In another embodiment, the selection of the closest reference content could also be based on the haptic signal itself. Instead of only looking at the distance in the affective space, the adaptation process could take into account the haptic signal itself by computing metrics that estimate the similarity of the reference signal and the signal of the experience. Such metric could be based on the intensity of the signal, its frequency, the type of waveform or the envelope of the signal. Metrics like PSNR could be used for instance. The selection of the closest reference content could then account for both the affective data and the haptic data.

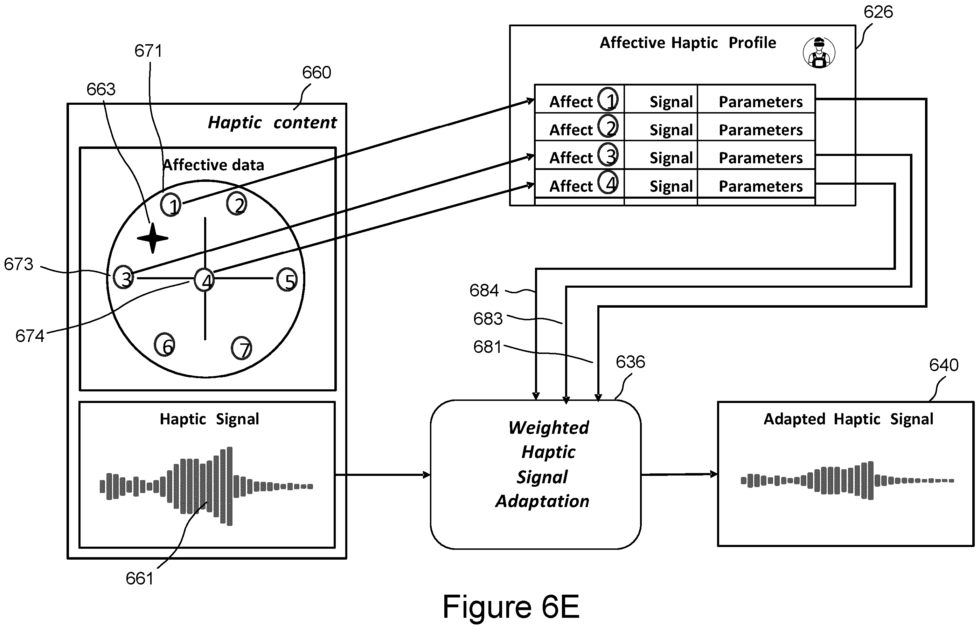

**Figure 6E** illustrates a second variant of haptic experience adaptation process according to the first embodiment. In this variant, the adaptation process uses data from multiple reference signals. For instance, in the case of a 2D model of affect such as the Circumplex model of affect with the valence and arousal parameters, the adaptation process could search for the 3 reference signals with the closest desired affective response. Within this 2D affective parameter space, the process may compute the barycentric coordinates of the affective response of the haptic signal from the experience relative to these 3 reference signals. The modifications of the haptic signals can then be performed by combining the feedback of the user, i.e. the information on how to adjust an input signal based on the associated affective data, for the three reference signals using barycenter coordinates as weights. In the example of figure 6E, the desired affective response 663 associated to the haptic signal 661 of the haptic content 660 is not found in the profile. In this case, the processor finds the closest matches, in this example the elements 671, 673, 674 and uses the corresponding parameters 681, 683, 684 from the affective haptic profile 626 to adapt the haptic signal 651 and determine the adapted haptic signal 640. In this variant, the parameters are weighted 636using the barycentric coordinates of the element 663 in the triangle composed of elements 671, 673 and 674. Another technique for weighting multiple elements could be to determine the weights from the distance between the target affective response 663 and the elements 671, 673, 674.

Given a haptic data format similar to the MPEG format, this adaptation process could be performed on the overall signal or it could target only parts of it. For instance, the adaptation could be limited to specific perceptions to adapt only specific haptic modalities, or it could be limited to certain channels to localize the adaptation to specific body parts, or it could be limited to specific bands to limit the changes to specific frequency ranges or it could be applied at the effect level to address only specific parts of a band. This would depend on where the affective information is attached (at the experience level, the perception level, the channel level, the band level or the effect level).

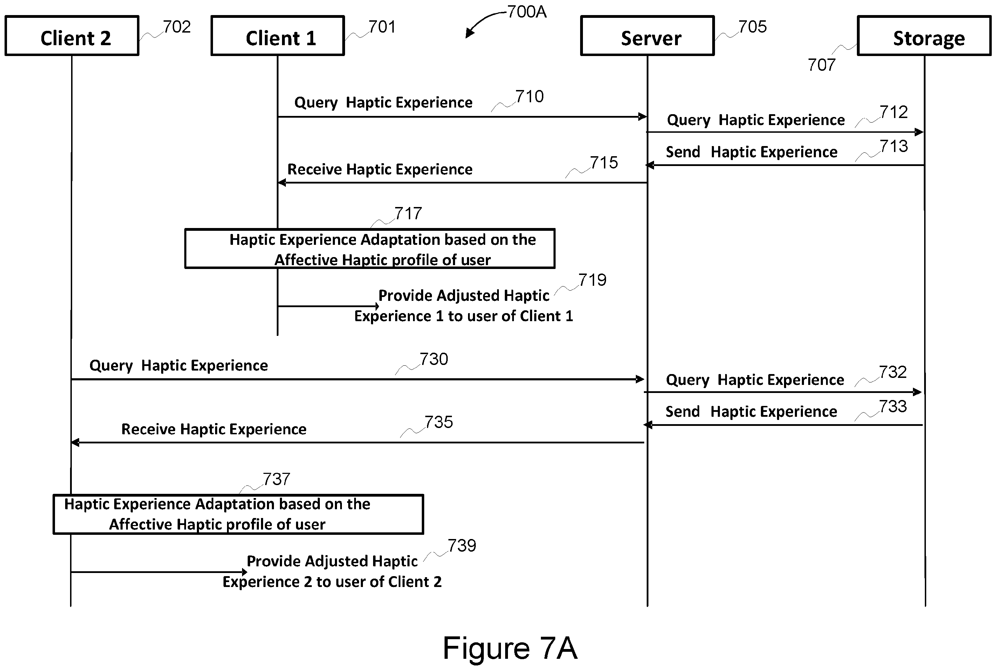

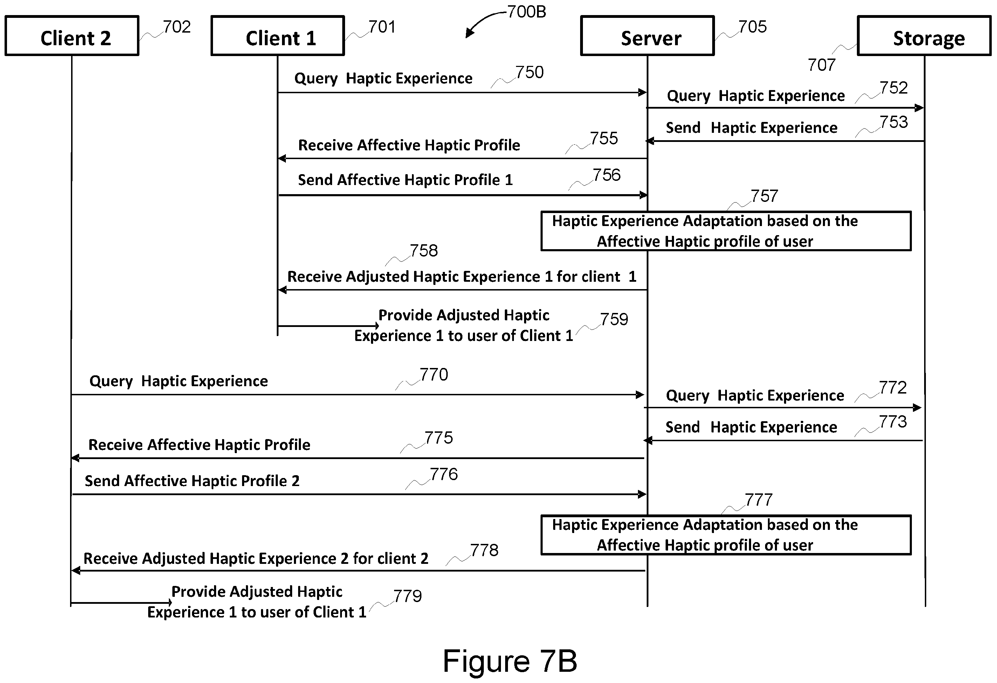

**Figure 7A** **and** **7B** illustrate examples of client-server interactions for streaming a haptic experience according to the first embodiment. Indeed, this proposed solution of the first embodiment may be used to adapt a complete haptic experience in advance. This may be useful from a streaming perspective. Given a client-server setup where a haptic experience is stored on a server and streamed to the client to be experienced by an end-user, the proposed adaptation process could be used on the client side to perform the necessary adjustments as illustrated in Figure 7A or more interestingly, it could be done on the server side to stream directly the adjusted data as illustrated in figure 7B.

In figure 7A, the process 700A illustrates the situation where two users want to have a haptic experience from a server 705 with their respective client devices 701 and 702. This is possible once the calibration process described above is completed, i.e. the affective haptic profile is established for the users. In step 710, the first user queries a haptic experience through the client device 701 from the server 705. In step 712, the server queries the haptic experience from storage 707 and obtains information representative of the haptic experience in step 713. In step 715, this information is then provided back to the client device 701. Based on the affective haptic profile associated with the first user, the client device 701 adapts 717 the haptic experience and provides 719 (i.e. renders or provides signals allowing a haptic rendering device to render) the adjusted haptic experience to its user. The same goes for the second user. In step 730, the second user queries a haptic experience through the client device 702 from the server 705. In step 732, the server queries the haptic experience from storage and obtains information representative of the haptic experience in step 733. In step 735, this information is then provided back to the client device 702. Based on the affective haptic profile associated with the second user, the client device 702 adapts 737 the haptic experience and provides 739 (i.e. renders or provides signals allowing a haptic rendering device to render) the adjusted haptic experience to its user.

Figure 7B illustrates the same situation as Figure 7B, with the difference that the adaptation is performed on the server side. In step 750, the first user queries a haptic experience through the client device 701 from the server 705. In step 752, the server queries the haptic experience from storage and obtains information representative of the haptic experience in step 753. In step 755, this information is then provided back to the client device 701. In step 756, the client device 701 provides the affective haptic profile of its user to the server 705. In step 757, the server 705 performs the adaptation of the haptic experience according to the received affective haptic profile. In step 758, the adjusted haptic experience is provided to the client device 701. In step 759, the client device 701 provides (i.e. renders or provides signals allowing a haptic rendering device to render) the adjusted haptic experience to its user. The same goes for the second user. In step 770, the second user queries a haptic experience through the client device 702 from the server 705. In step 772, the server queries the haptic experience from storage and obtains information representative of the haptic experience in step 773. In step 775, this information is then provided back to the client device 702. In step 776, the client device 702 provides the affective haptic profile of its user to the server 705. In step 777, the server 705 performs the adaptation of the haptic experience according to the received affective haptic profile. In step 778, the adjusted haptic experience is provided to the client device 702. In step 779, the client device 702 provides (i.e. renders or provides signals allowing a haptic rendering device to render) the adjusted haptic experience to its user.

The proposed solution may also be leveraged to allow the adaptation of a haptic signal to a specific haptic device. A user may choose to create different affective haptic profiles for different devices. This would allow to adjust a haptic experience not only to users but also to haptic devices. A user may then provide to the adaptation process the profile corresponding to the haptic setup that will be used to render the haptic experience. The resulting haptic experience will then be tailored not only to the user but also to the haptic devices used for rendering.

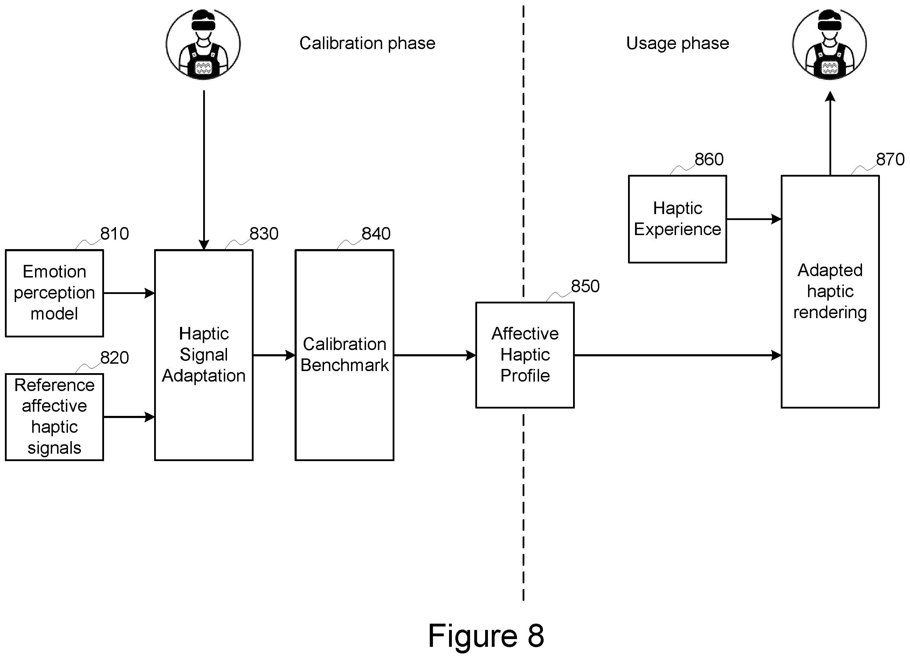

**Figure 8** illustrates an example of operations according to the first embodiment. Such embodiment uses a two-phases approach. In a calibration phase, a calibration benchmark 840 is operated over an emotion perception model 810 and reference affective haptic signals 820 to provide an adaptation of haptic signals 830 under control of the user. This results in the generation of an affective haptic profile 850 to be used in the second phase that correspond to the usage phase. A haptic experience 860 is adapted according to the affective haptic profile 850 to provide to the user an adapted haptic rendering 870.

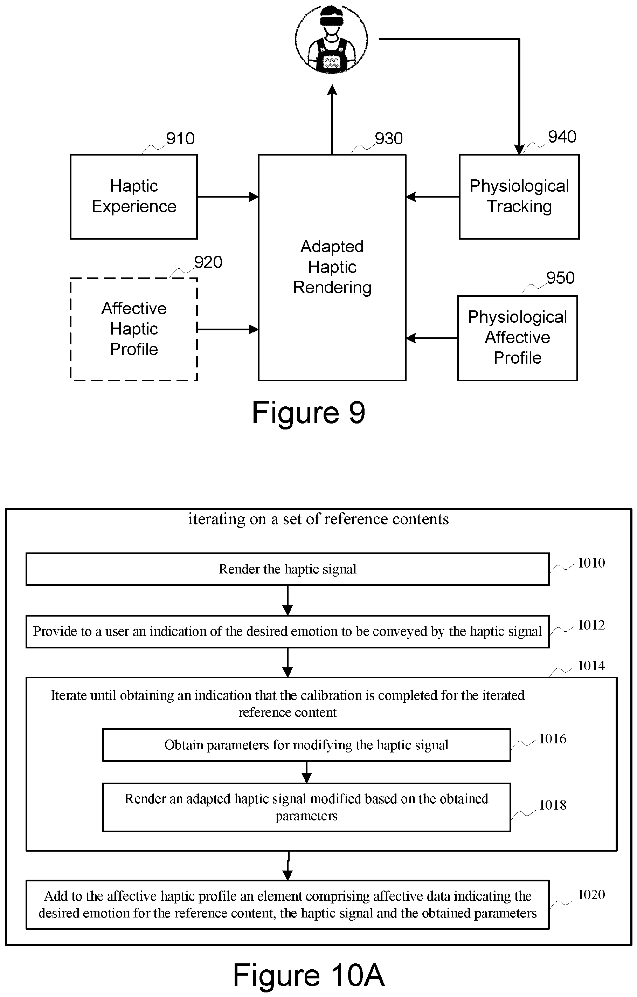

**Figure 9** illustrates an example of operations according to the second embodiment. This embodiment relies on real time data extracted from users' physiological reactions, therefore proposing a physiological closed loop control system where physiological data is used to perform an adaption of the haptic signals to achieve a desired emotion (i.e., affect). The method focuses on direct reactions to the haptic content and the acquired physiological data by multiple sensors adapted to capture the user's physiological reactions. Examples of such physiological acquisition are based on electrocardiograms (ECG), electro-dermal activity, pupillary dilation or brain activities measured through electroencephalography). The physiological data may be enhanced by the result of an analysis of captured images from the user, for example using face analysis, gaze tracking, or other image analysis techniques allowing to categorize a user expression (i.e., emotions) from such data.

This guarantees a real-time adaptation of the haptic signal to match the desired artistic vision by leveraging their physiological reaction to adjust the signal according to their reaction. For example, for a given haptic effect, when the physiological reaction is too low, the intensity of the haptic signal may be increased unit achieving a satisfying user reaction. This embodiment introduces the notion of physiological affective profile. Such profile maps affective data to physiological data. In other words, it indicates how a user reacts to different emotions from a physiological perspective. For example, fear usually triggers a heartbeat rate increase. By mapping key emotions to physiological data, this user profile allows the system to derive the emotional state of a user from physiological data. If, at a given time during a haptic experience, the emotional state of the user measured by the physiological tracking does not match the affective response targeted by the haptic experience designer, the system adjusts the haptic feedback in real-time. These modifications of the haptic feedback will trigger changes in the emotional state of the user and therefore changes in its physiological state. The system tracks the evolution of the physiological measurements to further adjust the haptic signal until the desired affective response is achieved. This control loop allows the system to tailor a haptic experience to any user and ensures that the emotional state of the user is aligned with the artist's vision. The figure provides a simplistic representation of the proposed system. As the user is running the haptic experience 910, a physiological tracking process 940 captures physiological data and send it to a signal adaptation process 930. This second process takes as input the physiological data from the physiological tracking process 940, a physiological affective profile 950 and the haptic signal of the haptic experience 910 provided with affective data. This process then adjusts 930 the haptic data in real time and tracks 940 the evolution of the physiological measurements to further adjust the haptic signal.

Optionally, in a variant embodiment, an affective haptic profile 920, as determined by the first embodiment, may be used to perform a better adaptation by taking into account the user's preferences in term of affective feedback. This variant combines both embodiments and benefits from the advantages of both solutions.

Here the modulation of the haptic signal aims at affecting the physiological state of the user. This modulation may be automatic by relying only on the feedback loop to converge or it may be guided by known or custom rules and principles or heuristics. A straightforward example of rule-based signal adjustments to physiological data would be the modulation of a signal eliciting fear by increasing or decreasing the amplitude and temporal density (i.e. frequency of the signal or frequency of the repetition of a pattern) of the haptic signal based on the user's heartbeat rate captured by ECG. First, the correlation between the heartbeat rate and the emotional state associated to fear can be specified in the user profile (i.e. what is the heartbeat rate of the user for a given level of fear). Second, it is known that the intensity and temporal density of a haptic signal rendered on a user (through vibration for instance) has a direct impact on its heartbeat rate. This can be leveraged in the control loop to facilitate the convergence of the emotional state of the user towards the desired affective response. For instance, the system may increase (or decrease based on the state of the user) the intensity and temporal density of the signal until the heartbeat rate of the user reaches the one associated to "fear" in the user's profile.

This method requires physiological data and an emotion perception model that can process a range of vitals to adapt a signal. This type of system may rely on a wide range of devices and methods to extract physiological data from users and map it to its emotional states. The data may be vitals (heartbeat rate, respiratory rate, skin conductivity) directly monitored through various devices (dedicated sensors or mass market products such as smartphones, smart watches, smart rings, etc.) or other signals such as 2D video streams capturing users facial expressions that can be analyzed to infer the emotion state of the user.

As with the first embodiment, these methods enable the signal to be adjusted for the user and for a device. Adjustments to the signal will occur until the user's emotional state converges with the desired affective response, regardless of the device.

In various situations users might not be in the same setup as designers, and thus have a different perception of an affective haptic feedback. Therefore, the solutions proposed herein may help the system to provide the best experience to the user in considering their hardware and interpersonal differences. When users do not have the same devices as the designer, the first method relying on reference signals would let user experience adapted haptic feedback that tend to reproduce the intended affective haptics. Moreover, interpersonal differences in terms of perception may be based on cultural differences, physical differences, or personal experience, and thus may benefit of being adapted for the user.

Modem smart watch integration high quality sensors and recent VR head mounted displays integrate eye-tracking devices that may provide advance physiological information and may be used to measure users' physiological reactions without being too invasive. Therefore, a user with a smartwatch could connect the device to the haptic physiological adapter containing the model and then experience adapted haptic feedback on a smartphone with a seamless process and get an augmented haptic experience that continuously evolve and consider his or her physiological reaction. Alternatively, advanced devices relying on multiple measurements and complex analysis could be used as black boxes and send a physiological state easier to process.

The methods proposed herein may help people with physiological sensibility, such as heartbeat issues, pain sensibility, high stress, epileptic, and users requiring advanced control over their affective reactions, e.g., children, phobic users. Both methods together would provide an advanced protection system. The first embodiment would calibrate the haptic experience for the user's specificity and the physiological reaction feedback loop would adapt and prevent extreme reactions from users, whilst the user still experiences the optimal affective haptic experience following the artistic vision from the designer.

**Figure 10A** illustrates an example of calibration method for determining an affective haptic profile according to embodiments. Such calibration method is for example implemented in a rendering device 100 of figure 1 and typically executed by the processor 101 of such device. The calibration is typically done for a unique user and therefore is specific for a single user. The method is iterated on a set of reference contents, a reference content comprising a haptic signal associated with affective data indicating a desired emotion to be conveyed by the haptic signal for the reference content. For an iterated reference content, in step 1010, the processor renders the haptic signal. When the rendering device 100 does not comprise haptic actuators, the haptic signal is provided to a haptic rendering device. As a result of this rendering, the user perceives the haptic feedback of the reference content. In step 1012, the processor provides to the user an indication of the desired emotion to be conveyed by the haptic signal. This is done for example by displaying affective model parameters 612 of figure 6B describing the artistic intent according to an affect model 611 of figure 6B. It may also simply be done by displaying a text or a graphic element (e.g. a picture of a human reacting accordingly) or other feedback means representing the desired emotion. In step 1014, the processor iterates until obtaining an indication that the calibration is completed (i.e., the adapted haptic signal correctly provides the desired emotion) for the iterated reference content and in step 1016, obtains information representative of an affective haptic profile and renders an adapted haptic signal based on the affective data and the affective haptic profile in step 1018, and more particularly based on adaptation parameters of the affective haptic profile. The user may update these adaptation parameters until they are satisfied with the rendered haptic signal. When this is the case, in step 1020, the processor adds to the affective haptic profile an element comprising affective data indicating the desired emotion for the reference content, the haptic signal and the adaptation parameters.

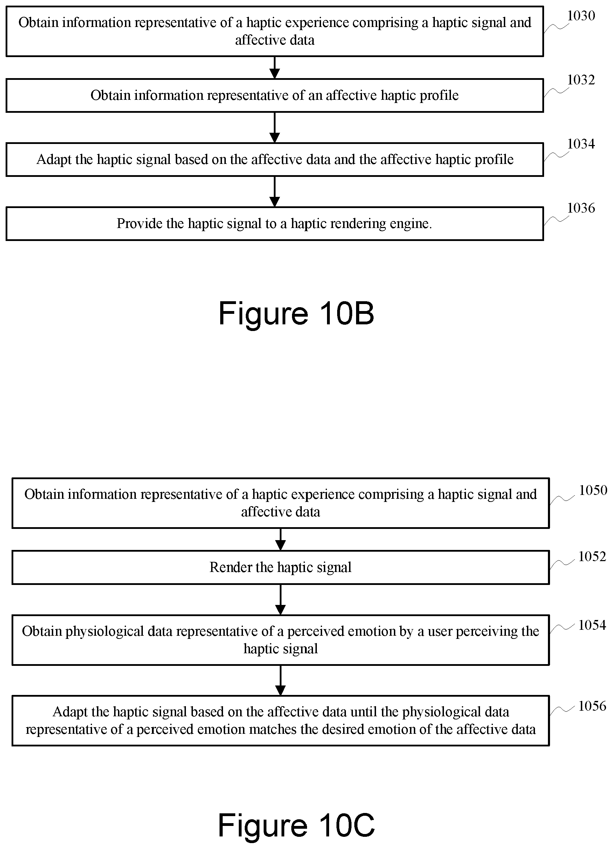

**Figure 10B** illustrates an example method for adapting a haptic experience using an affective haptic profile according to the first embodiment. Such method is for example implemented in a rendering device 100 of figure 1 and typically executed by the processor 101 of such device. In step 1030, the processor obtains information representative of a haptic experience comprising a haptic signal and affective data, the affective data indicating a desired emotion to be conveyed by the haptic signal. In step 1032, the processor obtains information representative of an affective haptic profile. Such affective haptic profile represents a list of elements and wherein an element comprises a reference content, a target affective response and parameters for adapting the haptic signal to obtain the target affective response and is for example determined according to the method of figure 10A. In step 1034, the processor adapts the haptic signal based on the affective data and the affective haptic profile and more particularly based on adaptation parameters of the affective haptic profile. This is done for example by selecting in the list of elements of the affective haptic profile an element whose target affective response is closest to the obtained affective data indicating a desired emotion to be conveyed by the haptic signal, as illustrated in figure 6D. It may also be done by selecting in the list of elements a plurality of elements whose target affective response are closest to the obtained affective data indicating a desired emotion to be conveyed by the haptic signal and weighting corresponding parameters using barycentric coordinates of the target affective response as weights, as illustrated in figure 6E. In step 1036, the processor provides the haptic signal to a haptic rendering engine or renders directly the haptic signal.

**Figure 10C** illustrates an example method for adapting a haptic experience using captured physiological data according to the second embodiment. Such method is for example implemented in a rendering device 100 of figure 1 and typically executed by the processor 101 of such device. In step 1050, the processor obtains information representative of a haptic content comprising a haptic signal and affective data, the affective data indicating a desired emotion to be conveyed by the haptic signal. In step 1052, the processor renders the haptic signal. When the rendering device 100 does not comprise haptic actuators, the haptic signal is provided to a haptic rendering device for rendering. As a result of this rendering, the user perceives the haptic feedback of the haptic experience. In step 1054, the processor obtains physiological data representative of a perceived emotion by the user perceiving the haptic signal. In step 1056, the processor adapts the haptic signal based on the affective data until the physiological data representative of a perceived emotion matches the desired emotion. By modifying the haptic signal, the adaptation modifies also its perception by the user.

Although different embodiments have been described separately, any combination of the embodiments together can be done while respecting the principles of the disclosure.

Although embodiments are related to haptic effects, the person skilled in the art will appreciate that the same principles could apply to other effects such as the sensorial effects for example and thus would comprise smell, taste, temperature, emotions, intensity highlights, etc. Appropriate syntax would thus determine the appropriate parameters related to these effects.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Additionally, this application or its claims may refer to "obtaining" various pieces of information. Obtaining is, as with "accessing", intended to be a broad term. Obtaining the information may include one or more of, for example, receiving the information, accessing the information, or retrieving the information (for example, from memory or optical media storage). Further, "obtaining" is typically involved, in one way or another, during operations such as, for example, storing the information, processing the information, transmitting the information, moving the information, copying the information, erasing the information, calculating the information, determining the information, predicting the information, or estimating the information. This application or its claims may refer to "device" or "apparatus" interchangeably.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

## Claims

1. A method comprising:
obtaining information representative of a haptic experience comprising a haptic signal and affective data, the affective data indicating a desired emotion to be conveyed by the haptic signal;
obtaining information representative of an affective haptic profile;
adapting the haptic signal based on the affective data and the affective haptic profile; and
providing the haptic signal for rendering.

2. The method of claim 1, wherein the affective haptic profile represents a list of elements and wherein an element comprises a reference content, a target affective response and parameters for adapting the haptic signal to obtain the target affective response.

3. The method of claim 2, further comprising selecting in the list of elements an element whose target affective response is closest to the obtained affective data indicating a desired emotion to be conveyed by the haptic signal.

4. The method of claim 2, further comprising selecting in the list of elements a plurality of elements whose target affective response are closest to the obtained affective data indicating a desired emotion to be conveyed by the haptic signal and weighting corresponding parameters using barycentric coordinates of the target affective response as weights.

5. A method comprising:
obtaining information representative of a haptic content comprising a haptic signal and affective data, the affective data indicating a desired emotion to be conveyed by the haptic signal;
rendering the haptic signal;
obtaining physiological data representative of a perceived emotion by a user perceiving the haptic signal; and
adapting the haptic signal based on the affective data until the physiological data representative of a perceived emotion matches the desired emotion.

6. A method for determining an affective haptic profile comprising a list of elements, the method comprising:
iterating on a set of reference contents, a reference content comprising a haptic signal associated with affective data indicating a desired emotion to be conveyed by the haptic signal for the reference content and, for an iterated reference content:
rendering the haptic signal;
providing to a user an indication of the desired emotion to be conveyed by the haptic signal;
obtaining parameters for modifying the haptic signal;
rendering an adapted haptic signal modified based on the obtained parameters;
iterating on the obtaining and rendering steps until obtaining an indication that the adapted haptic signal for the iterated reference content correctly provides the desired emotion; and
adding to the affective haptic profile an element comprising affective data indicating the desired emotion for the reference content, the haptic signal and the obtained parameters.

7. An apparatus comprising a processor configured to:
obtain information representative of a haptic experience comprising a haptic signal and affective data, the affective data indicating a desired emotion to be conveyed by the haptic signal;
obtain information representative of an affective haptic profile;
adapt the haptic signal based on the affective data and the affective haptic profile;
provide the haptic signal to a haptic rendering engine.

8. The apparatus of claim 7, wherein the affective haptic profile represents a list of elements and wherein an element comprises a reference content, a target affective response and parameters for adapting the haptic signal to obtain the target affective response.

9. The apparatus of claim 8, further comprising selecting in the list of elements an element whose target affective response is closest to the obtained affective data indicating a desired emotion to be conveyed by the haptic signal.

10. The apparatus of claim 8, further comprising selecting in the list of elements a plurality of elements whose target affective response are closest to the obtained affective data indicating a desired emotion to be conveyed by the haptic signal and weighting corresponding parameters using barycentric coordinates of the target affective response as weights.

11. An apparatus comprising a processor configured to:
obtain information representative of a haptic content comprising a haptic signal and affective data, the affective data indicating a desired emotion to be conveyed by the haptic signal;
render the haptic signal;
obtain physiological data representative of a perceived emotion by a user perceiving the haptic signal;
adapt the haptic signal based on the affective data until the physiological data representative of a perceived emotion matches the desired emotion;

12. An apparatus comprising a processor configured to determine an affective haptic profile comprising a list of elements, the processor being configured to:
iterate on a set of reference contents, a reference content comprising a haptic signal associated with affective data indicating a desired emotion to be conveyed by the haptic signal for the reference content and, for an iterated reference content:
render the haptic signal;
provide to a user an indication of the desired emotion to be conveyed by the haptic signal;
obtain parameters for modifying the haptic signal;
render an adapted haptic signal modified based on the obtained parameters;
iterate on the obtaining and rendering steps until obtaining an indication that the adapted haptic signal for the iterated reference content correctly provides the desired emotion; and
add to the affective haptic profile an element comprising affective data indicating the desired emotion for the reference content, the haptic signal and the obtained parameters.

13. A computer program comprising program code instructions for implementing the method according to any of claims 1 to 6 when executed by a processor.

14. A non-transitory computer readable medium comprising program code instructions for implementing the method according to any of claims 1 to 6 when executed by a processor.
